(19) Europäisches Patentamt
European Patent Office
Office européen des brevets

(11) Publication number: **0 133 737**
**B1**

# (12) EUROPEAN PATENT SPECIFICATION

(45) Date of publication of patent specification: **23.11.89**

(51) Int. Cl.$^4$: **H 02 B 7/08,** H 02 G 9/10

(21) Application number: **84303532.0**

(22) Date of filing: **25.05.84**

## (54) Vault mount for electrical apparatus.

(30) Priority: **15.08.83 US 522808**

(43) Date of publication of application:
**06.03.85 Bulletin 85/10**

(45) Publication of the grant of the patent:
**23.11.89 Bulletin 89/47**

(84) Designated Contracting States:
**AT BE CH DE FR GB IT LI LU NL SE**

(56) References cited:
**DE-A-1 949 694**
**US-A-1 778 373**
**US-A-2 350 140**
**US-A-3 522 970**

(73) Proprietor: **ASSOCIATED CONCRETE PRODUCTS, INC.**
**4301 W. Macarthur Boulevard**
**Santa Ana California 92704 (US)**

(72) Inventor: **Hoag, Jack E.**
**12341 Rebecca Lane**
**Santa Ana California 92704 (US)**

(74) Representative: **Sommerville, John Henry et al**
**SOMMERVILLE & RUSHTON 11 Holywell Hill**
**St. Albans Hertfordshire, AL1 1EZ (GB)**

**EP 0 133 737 B1**

Note: Within nine months from the publication of the mention of the grant of the European patent, any person may give notice to the European Patent Office of opposition to the European patent granted. Notice of opposition shall be filed in a written reasoned statement. It shall not be deemed to have been filed until the opposition fee has been paid. (Art. 99(1) European patent convention).

Courier Press, Leamington Spa, England.

**Description**

This invention relates to underground vaults for holding electrical apparatus such as that used in telephonic communications systems, the vault comprising a chamber with an openable cover substantially at ground level and having means for removing the equipment from the vault for providing access to the equipment.

It is becoming increasingly common for electrical utilities such as those which provide telephone service and electrical power to have underground electrical lines and, accordingly, underground equipment such as switching stations, transfomers and the like. Many communities presently require such utilities to have all of their lines and associated equipment underground. Although having such equipment underground makes a positive contribution to the aesthetic appearance of a neighbourhood and prevents exposure of the equipment to certain outdoor enviromental hazards, it is sometimes difficult for a person to gain access to underground equipment for maintenance and other purposes.

Underground telephone installations in particular frequently require a person to gain access to equipment located in underground vaults having upper covers that are approximately flush with the ground level. Heretofore, the persons had to either physically enter the vault, which therefore had to be made large enough to accommodate the person and the equipment; or the equipment had to be lifted from the vault either manually or by use of machinery external to the vault. It is inconvenient, wasteful and unnecessarily expensive to place a relatively small piece of electrical equipment in an underground vault large enough to accommodate a human being merely for the purposes of servicing the equipment. Although the equipment may be relatively small, it may also be too heavy for an individual to easily lift without the aid of other equipment. The use of other equipment to lift the electrical apparatus from the vault requires that the equipment be transported from one vault to another for lifting the equipment from the vault.

DE-A-1949694 describes an underground vault for holding electrical apparatus, comprising a chamber with a hinged cover substantially at ground level and a frame mounted on the underside of the cover, the electrical apparatus being carried on the underside of this frame, so that when the cover is opened, it comes between the electrical apparatus and anybody on the ground wanting close access to the latter. Access to the apparatus can therefore only be obtained either by standing in the vault or by stretching over it.

Therefore, there is a need for an underground vault for mounting electrical equipment such as to provide convenient access at ground level to equipment mounted in the vault with the latter also being able to be conveniently and economically sized to accommodate the equipment without needing to have the extra space necessary to accommodate a person in the vault.

According to the invention, there is provided an underground vault for holding electrical apparatus, comprising a chamber with an openable cover substantially at ground level, a mounting frame within the chamber for carrying the electrical apparatus, and pivot means whereby the frame can be swung to a position above the vault. The frame is independent of the cover and is mounted directly by the pivot means to a wall of the chamber so as to be pivotable, upwardly and laterally away from the chamber, to an elevated position in which the said apparatus, mounted on the frame, is exposed above, and The intimately accessible at ground level. The vault further has securing means for releasably locking the frame to another wall of the chamber, spring means for raising the frame to its elevated position on release of the securing means, and latch means for securing the frame in its elevated position.

An embodiment of the invention will now be described, by way of example only, with reference to the accompanying drawings, in which:-

Figure 1 is a cut away perspective view of the invention inside a vault; and

Figure 2 is an elevation view of the invention inside the vault of Figure 1.

Referring to Figure 1, an underground vault 10 comprises a chamber which may be formed of concrete or other suitable material and has an openable upper cover 12 that is preferably removable. As mentioned above, such a cover is approximately flush with the ground level. A mounting frame 14 is shown mounted between a first wall 16 of the chamber of the vault 10 and a second wall 18. As can be seen from the drawings, the frame 14 is entirely independent of the cover 12. A box 20 shown in phantom lines in represents a device such as a piece of electrical equipment which must be mounted in the vault 10. Details of the structure of the box to be mounted in the vault 10 are not essential to the present invention and are, therefore, not explained in detail herein. It is, however, essential that if the box 10 is connected to other equipment (not shown), then the connections (not shown) must be sufficiently long and flexible to permit the box 10 to be raised a short distance out of the vault as described herein.

In the exemplary enviroment shown in Figures 1 and 2, the frame 14 comprises a pair of rails 22 and 24, each being pivotally mounted directly to the first wall 16 by suitable mounting brackets 26 and 28, respectively. Mounting brackets 26 and 28 may comprise any convenient pivotal mounting devices. The bracket 26, for example, is shown to comprise a flat, rectangular plate 30, which a pair of screws 32 and 34, or other suitable fastening means, secure to the first wall 16. A projection 36 extends generally perpendicularly from the rectangular plate 30 and includes a cylindrical passage therethrough for receiving a cylindrical stud 38 that extends from the end of the rail 22. The bracket 28 may be formed similarly to the bracket 32 and therefore is not described in further detail.

As shown in Figure 1, the rails 22 and 24 are generally parallel and extend generally perpendicularly away from the wall 16. The rail 22 includes an inclined portion 40 that extends at an angle from the generally horizontal end portion of the rail 22, which terminates at the bracket 26 as shown in Figure 1, into the vault 10. The rail 24 includes an inclined portion 42 similar to the inclined portion 40.

The frame 14 includes a seat 44 which extends from the inclined portions 40 and 42. The seat 44 preferably has a generally rectangular configuration formed of an extension 46 of the rail 22 connected to the inclined portion 40 and an extension 48 of the rail 24 connected to the inclined portion 42. The extensions 46 and 48 are preferably generally parallel and are connected by crossbars 52 and 54 so that the seat 44 is a rigid structure. The extensions 46 and 48 may include a plurality of passages 56 therethrough to provide convenient means for attaching the box 20 on top of the seat 44.

Referring to Figures 1 and 2, the rail 24 has an end portion 58 which extends beyond the seat 44. The end 58 includes a passage therein for rotatably mounting a key 60, which includes an elongate shaft 62. A bracket 64 having a slot 66 therein extends away from the wall 18 to align the center of the slot 66 with the elongate shaft 62. The elongate shaft 62 has a proximal end 63 having a handle 70 formed thereon and a distal end 65 having a cross piece 68 connected perpendicularly thereto. As shown in Figures 1 and 2, the distal end 65 extends through the slot 66, and the cross piece 68 is orientated generally perpendicularly to the slot 66 to retain the end 58 against upward motion away from the bracket 64. The handle 70 attached to the proximal end 63 of the shaft 62 provides convenient means for rotating the cross piece 68 to either align the cross piece 68 parallel with the slot 66 to permit the frame 14 to be pivoted to lift the box 20 out of the vault 10, or to orientate the cross piece 68 perpendicular to the slot to retain the box 20 and frame 14 stationary in the vault 10. The shaft 62 preferably has an enlarged portion 72 which rotatably mounts the shaft 62 in the end 58 of the rail 24 to retain the shaft 62 in a generally perpendicular orientation relative to the end 58.

Still referring to Figures 1 and 2, the frame 14 preferably includes a pair of torsion springs 74 and 76 which provide means for biasing the frame 14 toward pivotal motion about the brackets 26 and 28 to lift the box 20 out of the vault 10 to the position shown in phantom lines in Figure 2. The torsion spring 74 includes an end 78 engaged with the rail 22, a central portion 80 retained adjacent to the wall 16, a plurality of brackets 82-84, and an end 86 spring-baised against the wall 16 by torsion in the central portion 80. Similarly, the torsion spring 76 includes an end 88 engaged with the rail 24, a central portion 90 retained by the brackets 82 and 83 adjacent the wall 16, and an end 92 urged against the wall 16 by torsion in the central portion 90. The central portions 80 and 90 of the torsion springs 74 and 76, respectively, are under torsion to urge the frame 14 to rotate counter-clockwise about the brackets 26 and 28 as viewed in Figures 1 and 2, to tend to lift the box 20 to the elevated position shown in phantom lines in Figure 2.

The rail 22 preferably includes a projection 94 extending therefrom in general parallel alignment with the wall 16. A latch 96 is suitably mounted to the wall 16 to receive the projection 94 therein as shown in Figure 2 when the box is in the elevated position. Assembly of the frame 14 may be done in a number of sequential steps: however, a satisfactory method of assembly is to first mount the brackets 26 and 28 to the wall 16 and to mount the bracket 64 to the wall 18. The frame 14 should be rotated into the elevated position to facilitate installation of the torsion springs 74 and 76, because when the frame 14 is in the elevated position, the torsion spring forces in the torsion springs 74 and 76 are at the minimum possible values for the fully assembled structure. The latch 96 should be installed when the frame 14 is in the elevated position to ensure that the projection 94 properly engages the latch 96. The central portion 80 of the torsion spring 74 should be properly positioned on the wall 16 to ensure that the end 78 of the torsion spring 74 remains engaged with the rail 22 at all positions thereof between and including the upper position as shown in phantom lines in Figure 2 and the lower position as shown in Figures 1 and 2. The torsion spring 76 must be similarly aligned to ensure that the end 88 thereof remains in contact with the rail 24.

The torsion springs 74 and 76 may be formed such that there is very little or no torsion spring force on the rails 22 and 24 when the seat 44 is in the elevated position. Securing the rail 22 to the wall 16 by means of the projection 94 engaged in the latch 96 ensures that the box 20 remains in a stable position, so that a person may perform desired tasks on equipment located in the box 20 without undesirable movement thereof.

After the frame 14 is fully assembled and all components thereof attached to the desired walls 16 and 18, the box 20 is secured to the seat 44. After all necessary connections (not shown) have been made to the box 20, the box 20 and the frame 14 are rotated clockwise about the brackets 26 and 28 to position the box 20 within the vault 10. In order to lock the frame 14 inside the vault 10, the crossmember 68 of the key 60 is aligned parallel with the slot 66 and inserted therethrough.

After the crossmember 68 has passed completely through the slot 66 in the bracket 64, rotation of the handle 70 to place the crossmember 68 approximately perpendicular to the slot 66 locks the frame 44 to the bracket 64. When the seat 44 is in its locked-down position, the spring bias forces from the torsion springs 74 and 76 urge the crossmember 68 against the underside of the bracket 64 to frictionally engage the crossmember 68 and the bracket 64 so that small vibrations do not turn the crossmember 68 into alignment with the slot 66, thereby inadvertently releasing the seat 44 from the locked down position.

In order to gain access to the box 20, a person must first remove the cover 12 from the vault 10 and then rotate the key 60, preferably by grasping the handle 70 and exerting a force thereon to rotate the shaft 62 so that the cross piece 68 is aligned parallel with the slot 66. Rotation of the handle 62 may be facilitated by exerting a downward force on the handle or on the box 20 to relieve the frictional engagement of the cross piece 68 with the underside of the bracket 64. After the key 60 has been released from the bracket 64, an operator should continue to exert a clockwise torque on the frame 14 as viewed in Figures 1 and 2 in order to prevent it from rapidly springing upward against the wall 16. The frame 14 should be permitted to rotate slowly in a counter-clockwise direction until the projection 94 is retained within the latch 96. When the box 20 has been elevated pivotally upwards and laterally outwards to the position shown in phantom lines in Figure 2, and the projection 94 secured within the latch 96, the box 20 is not only exposed above the ground, but close and intimate access to it is easily obtainable by a person on the ground beside the vault, ie to the left of Figure 2, since the box 20 faces laterally outwardly as seen in Figure 2 and access is not blocked by the frame 14 or by the cover 12 which has been removed.

**Claims**

1. An underground vault (10) for holding electrical apparatus, comprising a chamber with an openable cover (12) substantially at ground level, a mounting frame (14) within the chamber for carrying the electrical apparatus (20) and pivot means (26, 28) whereby the frame can be swung to a position above the vault, characterised in that the frame (14) is independent of the cover (12) and is mounted directly by the pivot means (26,28) to a wall (16) of the chamber so as to be pivotable, upwardly and laterally away from the chamber to an elevated position in which the said apparatus (20) mounted on the frame is exposed above and intimately accessible at ground level, and further characterised by securing means (62,64,68) for releasably locking the frame (14) to another wall (18) of the chamber, by spring means (74,76) for raising the frame to its elevated position on release of said securing means, and by latch means (94,96) for securing the frame in its elevated position.

2. A vault according to Claim 1, characterised in that the mounting frame (14) includes generally parallel rails (22,24) mounted at one end of the pivot means (26,28).

3. A vault according to Claim 2, characterised in that the spring means (74,76) comprise torsion springs, mounted on the same wall (16) as the pivot means and acting between the said wall (16) and the rails (22,24).

4. A vault according to any one of Claims 1 to 3, characterised in that the mounting frame (14) has means (56) for mounting the electrical apparatus (20) on top of the frame.

5. A vault according to any one of Claims 1 to 4 characterised in that the securing means (62,64,68) comprise a bracket (64) fixed to said other wall (18) and having an elongate slot (66), and a key (60) carried rotatably by the mounting frame (14) remote from the pivot means (26,28), the key comprising an elongate shaft (62) having a distal end (65) with a cross piece (68) and a proximal end (63) having a handle (70), the cross piece (68) being lockable behind the bracket (64) to secure the frame (14) in position, and releasable by rotation of the shaft (62) to allow the cross piece to pass upwardly through the slot (66).

**Patentansprüche**

1. Unterirdische Kammer (10) zur Aufnahme von elektrischem Gerät, mit einem Raum mit einem abnehmbaren Deckel (12), der sich im wesentlichen auf Bodenniveau befindet, einem Montagerahmen (14) innerhalb des Raumes zum Tragen des elektrischen Gerätes (20), sowie mit Gelenken (26, 28), wobei der Rahmen in eine Position oberhalb der Kammer verschwenkt werden kann, dadurch gekennzeichnet, daß der Rahmen unabhängig vom Deckel (12) ist und unmittelbar durch die Gelenke (26, 28) an einer Wand (16) des Raumes angelenkt ist, nach oben und vom Raum seitlich hinweg in eine angehobene Position verschwenkbar ist, in welcher das Gerät (20), das am Rahmen montiert ist, nach oben frei ausgesetzt und auf Bodenniveau vollständig zugänglich ist, und daß Sicherungsmittel (62, 64, 68) vorgesehen sind, um den Rahmen (14) entriegelbar an einer anderen Wand (18) des Raumes zu verriegeln, und zwar mittels Federn (74, 76) um den Rahmen in seine angehobene Position bei Entriegeln der Sicherungsmittel anzuheben, und daß ein Riegel (94, 96) vorgesehen ist, um den Rahmen in seiner angehobenen Position zu sichern.

2. Kammer nach Anspruch 1, dadurch gekennzeichnet, daß der Montagerahmen (14) im wesentlichen zueinander parallele Schienen (22, 24) aufweist, die an einem Ende des Gelenks (26, 28) montiert sind.

3. Kammer nach Anspruch 2, dadurch gekennzeichnet, daß die Federn (74, 76) Torsionsfedern umfassen, die an derselben Wand (16) wie das Gelenk montiert sind und die zwischen dergenannten Wand (16) und den Schienen (22, 24) wirken.

4. Kammer nach einem der Ansprüche 1 bis 3, dadurch gekennzeichnet, daß der Montagerahmen (14) Mittel (56) zum Lagern des elektrischen Gerätes (20) auf dem Rahmen aufweist.

5. Kammer nach einem der Ansprüche 1 bis 4, dadurch gekennzeichnet, daß die Sicherungsmittel (62, 64, 68) eine Konsole (64) aufweisen, die an der genannten anderen Wand (18) fixiert ist und ein Langloch (66) aufweisen, sowie einen Schlüssel (60), der drehbar am Montagerahmen (14) an einer dem Gelenk (26, 28) entfernten Stelle gelagert ist, daß der Schlüssel einen langgestreckten Schaft (62) mit einem entfernten Ende (6) mit einem Querstück (68) und einem nahen Ende (63) mit einem Handgriff (70) umfaßt, und daß das Querstück (68) hinter der Konsole (64) verriegelbar ist, um den Rahmen (14) an Ort und Stelle zu sichern, und freigebbar durch Verdrehen des Schaftes (62), so daß das Querstück durch das Langloch (66) nach oben hindurchtreten kann.

**Revendications**

1. Ouvrage souterrain (10) destiné à contenir un appareil électrique, comprenant une chambre pourvue d'un couvercle ouvrant (12) sensiblement au niveau du sol, un châssis de montage (14) disposé dans la chambre pour porter l'appareil électrique (20), et des moyens à pivot (26, 28) permettant de faire pivoter le châssis jusqu'à une position située au-dessus de l'ouvrage, caractérisé en ce que le châssis (14) est indépendant du couvercle (12) et est monté directement par les moyens à pivot (26, 28) sur une paroi (16) de la chambre de façon à pouvoir pivoter vers le haut et latéralement en s'éloignant de la chambre jusqu'à une position levée dans laquelle ledit appareil (20) monté sur le châssis est apparent au-dessus du niveau du sol et est directement accessible à ce niveau, et caractérisé en outre par des moyens de fixation (62, 64, 68) agencés pour fixer le châssis (14) à une autre paroi (18) de la chambre d'une manière pouvant être libérée, par des moyens à ressort (74, 76) agencés pour soulever le châssis jusqu'à sa position levée quand lesdits moyens de fixation sont libérés, et par des moyens d'arrêt (94, 96) agencés pour bloquer le châssis dans sa position levée.

2. Ouvrage selon la revendication 1, caractérisé en ce que le châssis de montage (14) comporte des barres sensiblement parallèles (22, 24), montées à une extrémité sur les moyens à pivot (26, 28).

3. Ouvrage selon la revendication 2, caractérisé en ce que les moyens à ressort (74, 76) comportent des ressorts de torsion, montés sur la même paroi (16) que les moyens à pivot et agissant entre ladite paroi (16) et les barres (22, 24).

4. Ouvrage selon l'une des revendications 1 à 3, caractérisé en ce que le châssis de montage (14) comporte des noyens (56) pour le montage de l'appareil électrique (20) sur le dessus du châssis.

5. Ouvrage selon l'une des revendications 1 à 4, caractérisé en ce que lesdits moyens de fixation (62, 64, 68) comportent une console (64) fixée à ladite autre paroi (18) et pourvue d'une fente allongée (66), et une clé (60) portée de manière rotative par le châssis (14) à distance des moyens à pivot (26, 28), cette clé comportant une tige allongée (62) ayant une extrémité distale (65) pourvue d'une pièce transversale (68) et une extrémité proximale (63) pourvue d'une poignée (70), la pièce transversale (68) étant agencée de manière à être bloquée derrière la console (64) pour retenir le châssis (14) en position, et à être libérée par rotation de la tige (62) pour lui permettre de monter en passant à travers la fente (66).

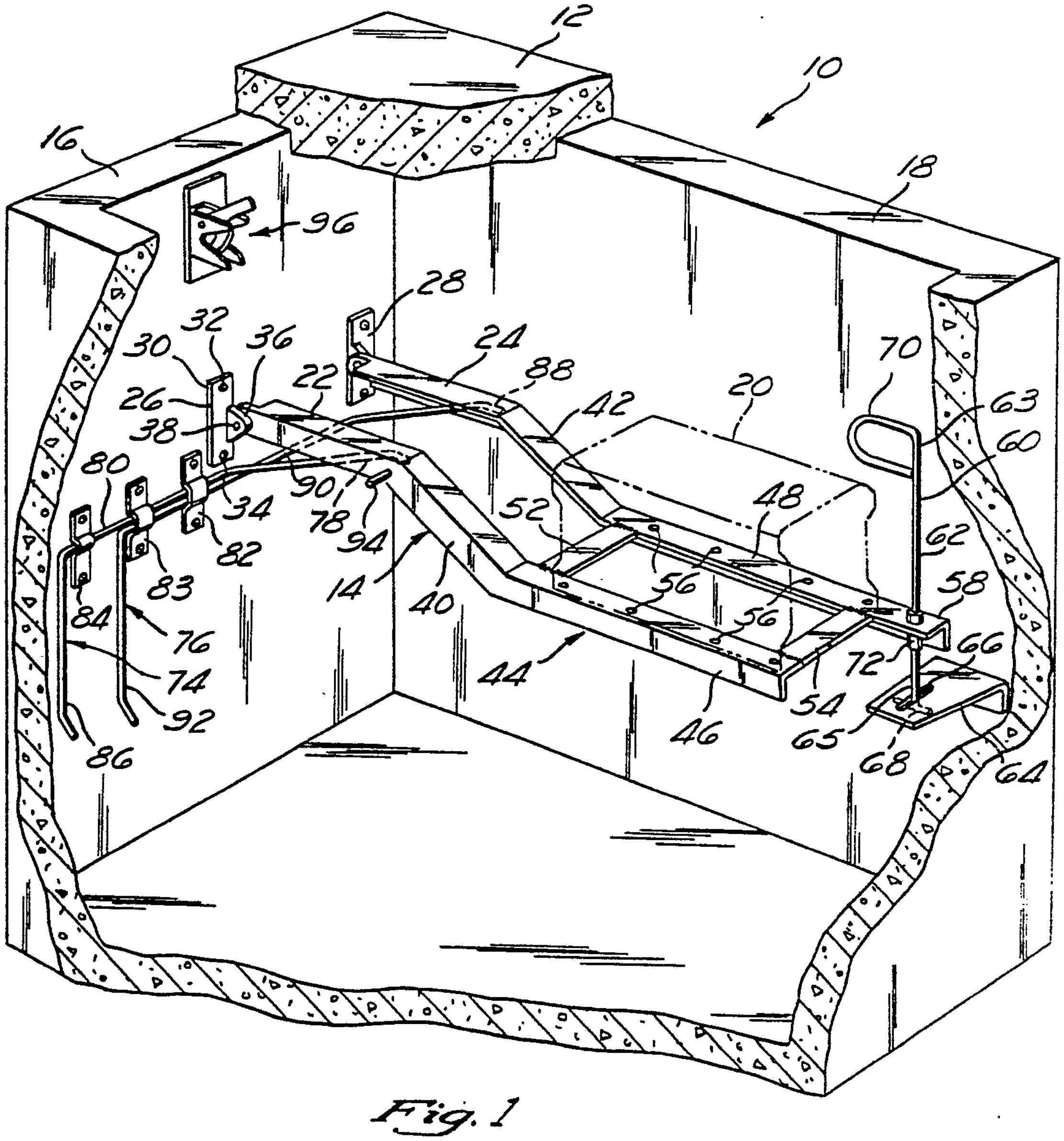
12
10
16
18
96
28
24
32
30
36
88
70
22
20
26
42
63
38
60
80
90
48
52
34
78
94
62
56
58
82
84
83
14
40
56
72
66
76
54
74
44
92
46
65
68
64
86

Fig. 1

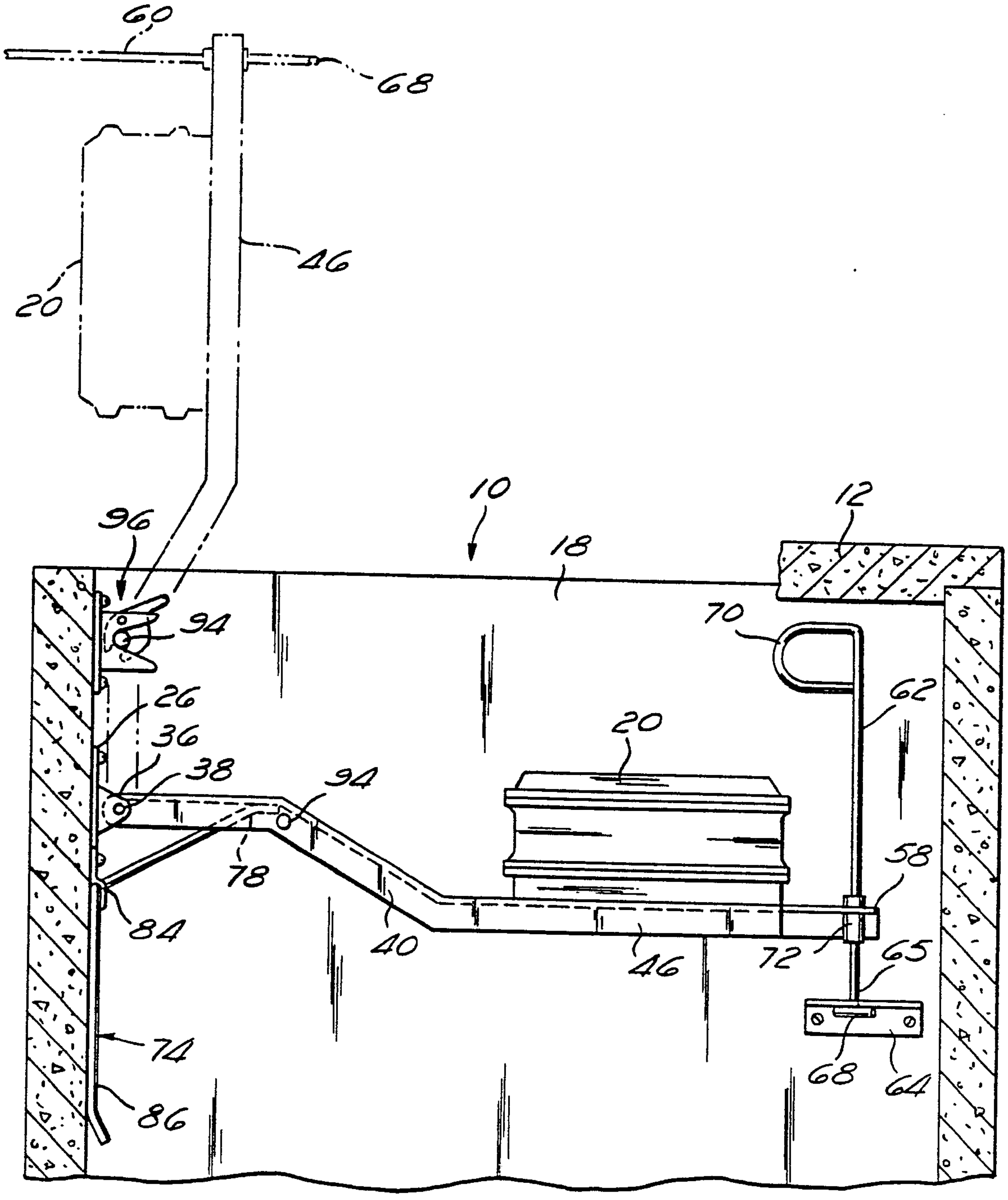
60
68
46
20
10
12
96
18
94
70
26
62
36
20
38
94
58
78
84
40
46
72
65
74
68
64
86

Fig. 2